# EUROPEAN PATENT SPECIFICATION

(11) **EP 4 021 206 B1**
(45) Date of publication and mention of the grant of the patent: **27.11.2024**
(21) Application number: 20758141.4
(22) Date of filing: 13.08.2020
(51) Int. Cl.: A23J 3/26, A23L 11/00, A23J 3/22, A23J 3/14, A23J 3/16, A23J 3/18, A23L 13/40

(54) **MEAT ANANLOGUE PRODUCT COMPRISING HYDRATED TEXTURED PLANT PROTEIN**
FLEISCHANALOGES PRODUKT MIT HYDRATISIERTEM, TEXTURIERTEM PFLANZENPROTEIN
PRODUIT ANALOGUE À LA VIANDE COMPRENANT DES PROTÉINES VÉGÉTALES TEXTURÉES HYDRATÉES

(30) Priority: 26.08.2019 US 201962891485 P
(43) Date of publication of application: 06.07.2022
(73) Proprietor: Société des Produits Nestlé S.A., 1800 Vevey (CH)
(72) Inventor: RIDDLE, Ryan, Solon, OH 44139 (US); GADDIPATI, Sanyasi, BEACHWOOD, Ohio 44122 (US)
(74) Representative: Dinger, Hansjörg
(86) International application number: PCT/EP2020/072719
(87) International publication number: WO 2021/037574

(56) References cited:
- EP-A1- 1 759 593
- EP-A1- 3 508 067
- WO-A1-2018/177717
- WO-A2-2008/083117
- US-A- 4 061 784
- US-A1- 2012 251 686
- US-A1- 2017 105 438

## Description

Today's consumer demand more and more meat analogue products as substitutes for real meat based products in their diets. Reasons for this trend are varying from ecological, to economical, ethical and more health conscious considerations. Typically, such meat analogue products are plant protein extrudates, which are mixed with binders, oil and fat and various colorings and flavorings. However, there are still many limitations as to product quality such in taste, texture and overall visual appearance. Today the trend is towards meat replacement products, which mimic raw meat, meaning that the consumer buys these products 'raw' and processes/cooks them in the kitchen in the same way as he would with a corresponding raw meat product. Hence, the consumer expects those meat analogue products also to behave in the same way as raw meat when it comes to the taste, texture, and appearance of those products during the preparation and transformation during a cooking process.

Several solutions exist today and are for example described in WO2015/153666 (A1) and WO2017/070303(A1). US2012251686 describes a flavor stabilized hydrated texturized plant protein may be produced by infusing dehydrated texturized plant protein particles with a water solution of one or more flavors and one or more heat denaturable soluble proteins. A binding and thickening water solution, including a heat denaturable soluble protein, a gum, an insoluble food protein, and/or a starch, may be added to the flavor stabilized hydrated texturized plant protein to create a formable mass. Fat may be added to the formable mass to produce a mass of generally moist crumbly pieces, wherein the crumbly pieces are generally surrounded by the binder/thickener. WO2018177717 disclose a method of preparing a meat analogue, said method comprising the steps of: providing proteinaceous fibres comprising, by weight of the proteinaceous fibres, 40-80 wt.% of water and 5-50 wt.% protein selected from dairy protein, egg protein, plant protein, fungal protein and combinations thereof; providing an aqueous gelling composition, comprising by weight of the gelling composition: i. 0.01 -2 wt.% xanthan gum; ii. 0.01 -2 wt.% galactomannan; iii. at least 80 wt.% water; combining 100 parts by weight of the proteinaceous fibres with 2-50 parts by weight of the aqueous gelling composition. US4061784 describes a meat analogue in form of shaped meat products, e.g. beef chunks, hamburgers, patties, chicken and meat loaves, containing 10-70wt% fibrous texturized vegetable protein, 7S soy protein isolates and 30-90wt% water. The fibrous texturized vegetable protein is coated with the binder and the product is shaped and heated to heat-set the binder. EP3508067 relates to a method for producing a vegetable meat substitute having improved texture and appearance. The invention also relates to vegetable meat obtained by the method. The vegetable meat substitute provided by the method of the invention provides also has an improved shape stability. With today's available meat alternative products, however, many limitations still exist and there is still a clear and persisting need in the art to improve the quality of such meat analogue products, as to taste, texture and particularly also to the visual aspects of such products, as to before, during and after the cooking process.

The object of the present invention is to improve the state of the art and to provide an improved solution as to meat analogue products and their process of manufacture. In particular, the object of the present invention is to provide a raw meat analogue product, where the product requires to be cooked like a real raw meat product before consumption.

The object of the present invention is achieved by the subject matter of the independent claim. The dependent claims further develop the idea of the present invention.

Accordingly, the present invention provides a process according to claim 1 for the preparation of a meat analogue product comprising a textured plant protein, a binder, a flavor, vegetable fat and a colorant, wherein the textured plant protein is between 65 to 85%, preferably between 70-80%, hydrated.

The inventors surprisingly found, that when the textured plant protein of the meat analogue product is between 65 to 85% hydrated, that a beneficial texture is formed especially in case of a minced meat analogue product. The minced meat analogue product is mainly used to provide two different preparation methods for cooking. First method uses the minced meat as Bolognese style product and therefore it should be able to crumble during preparation and the crumbles should have a good texture and bite (mouthfeel). The second method is to use the minced meat to form patties or meat balls and therefore it should stick together. The inventors have found, that if the plant protein composition is hydrated more to than 85%, a slimy and to sticky product is obtained. In case the plant protein composition is hydrated to less than 650, a too dry product is obtained to form patties or meat balls and the mouthfeel of the product is too dry.

### Detailed Description of the invention

The present invention pertains to a process for the preparation of a meat analogue product comprising a textured plant protein, a binder, a flavor, vegetable fat and a colorant, the process comprising the steps of:
a) mixing the textured plant protein with water;
b) adding the binder, the flavor and the colorants, and further mixing to a mass;
c) cooling the mass and adding ground fat having an average particle size of 1-3 mm, and further mixing;
wherein the textured plant protein is hydrated between 65 to 85%, preferably between 70-80%, in the meat analogue product and wherein the meat analogue product has a visual marbled aspect due to the presence of the fat.

Preferably, the meat analogue product of the present invention is raw, meaning that the product was not cooked during its process of manufacture.

"Meat analogue product", sometimes also called meat alternative, meat substitute, mock meat, faux meat, imitation meat or vegetarian meat, refers herein to a food product, exclusively made from vegetarian ingredients, and which has qualities as to appearance, taste, flavor, and texture as the corresponding real meat product.

"Textured plant protein" is referred in the literature also as 'texturized plant' or 'texturized vegetable protein' (TVP). It typically refers to a defatted plant protein flour, such as for example defatted soy flour, which is processed e.g. by extrusion into chunks or flakes. In one preferred embodiment of the present invention the meat analogue product comprises between 20 to 35wt% (weight percent of the total composition) of textured plant protein, preferably between 20 to 30wt%, preferably between 22 to 30wt%, preferably between 23 to 28wt% (weight percent of the total composition).

The term "raw" for the present invention means 'un-cooked'.

The term "hydrated" means that the textured plant protein is combined with water, which is absorbed by the textured plant protein at a temperature of 22°C. For clarification: A 100% hydrated textured plant protein is a textured plant protein, which is fully saturated with water, i.e. which cannot absorb any further water or any further other aqueous liquid. A 0% hydrated textured plant protein is a textured plant protein, which is absolutely dry and which does not contain any water or moisture. A 50% hydrated textured plant protein is a textured plant protein, which is combined and absorbed with 50% of the amount of water, which it could absorb, or for which it has the capacity to absorb. For the present invention, the capacity of a textured plant protein to absorb water or moisture is considered as being linear in the range from 0% to 100%, and at a temperature of 22°C.

In one preferred embodiment of the present invention, the textured plant protein is between 65 to 85% hydrated, preferably between 67 to 830, preferably between 70 to 80% hydrated. In an embodiment of the present invention, 15 to 35% of the textured plant protein is not hydrated, preferably 17 to 330, preferably 20 to 30% is not hydrated. The hydration is determined for the final product.

The term "flavourings" according to this invention means ingredients selected from the group consisting of salt, sugar, vinegar, yeast extract, vegetable powder, bacterial extract, vegetable extract, reaction flavour, hydrolysed plant protein, acid, garnishes, herbs, spices or combinations of these. The meat analogue product according to the invention comprise 0 to 10% flavourings, preferably 0.5 to 10%, preferably 0.5 to 7%, preferably 0.5 to 50, preferably 1 to 10%, preferably 1 to 50 (by weight of the composition). A bacterial extract is described within WO2009040150 or WO2010105842. A vegetable extract is described within WO2013092296. Vegetable powder means at least one ingredient of onion powder, garlic powder, tomato powder, celery root powder or a combination thereof. Garnishes, herbs, spices or a combination thereof are selected from the group comprising pieces of parsley, celery, fenugreek, lovage, rosemary, marjoram, dill, tarragon, coriander, ginger, lemongrass, curcuma, chili, ginger, paprika, mustard, garlic, onion, turmeric, tomato, coconut milk, cheese, oregano, thyme, basil, chillies, paprika, pimento, jalapeno pepper, white pepper powder and black pepper or combinations of these.

The term "marbled" means that the product has markings and colorings suggestive of marble, and which are marked herein by the intermixture of textured plant protein/binder composition, and a vegetable fat composition. This visual aspect reflects the fat and fat distribution as found in corresponding real meat products.

In one preferred embodiment of the present invention, the meat analogue product does not comprise an ingredient from an animal origin. The product of the present invention is a vegetarian or vegan food product.

In one other embodiment of the present invention, the textured plant protein of the meat analogue product is selected from soy bean protein, pea protein, lentil protein, lupin bean protein, wheat gluten, or a combination thereof. Further appropriate protein sources may be proteins from beans such as green, red or black beans, chickpeas, fava beans, spirulina, or from chia, quinoa or hemp seeds.

In one embodiment of the present invention, the binder of the meat analogue product comprises a cellulose, a fiber, a gelatinized starch, an un-textured protein isolate, or a combination thereof. In one preferred embodiment of the present invention, the binder is methyl-cellulose. In one preferred embodiment of the present invention the meat analogue product comprises between 1 to 3wt% (weight percent of the total composition) of methyl-cellulose, preferably between 1.25 to 2.5wt%, more preferably between 1.5 to 2.25wt% (weight percent of the total composition).

"Gelatinized starch" can be sourced directly as gelatinized starch or can be achieved by cooking native starch with water.

"Un-textured plant protein isolate" refers to a protein isolate, which did not undergo a texturing process such as for example through extrusion.

Preferably, the binder used in the meat analogue product is a paste. A "paste" is a soft plastic composition, made with the cited ingredients and water, and which constitute the binder in the present invention.

In one other embodiment of the present invention, the colorant is selected from bell pepper, beetroot, carrot, black current, malted barley powder or combination thereof. In one embodiment of the present invention the meat analogue product comprises between 0.1 to 5wt% (weight percent of the total composition) of colorants, preferably between 0.1 to 3wt% (weight percent of the total composition).

In a preferred embodiment of the present invention, the fat comprised is solid at a temperature of 20°C, preferably at a temperature of 24°C.

In one embodiment of the present invention, the fat is a vegetable fat selected from coconut fat, palm fat, shea butter, or a combination thereof.

The fat has an average particle size of 1-3mm. The presence of those particles significantly help to improve the forming of the visual aspect of the marbled meat analogue product. "Average particle size" is defined herein as meaning that 90% of all particles of a batch of particles fall within a particular defined size range in [mm]. The size of the particles were herein determined by sieving through appropriate sieves or a mesh.

In one embodiment of the present invention, the meat analogue product comprises between 1 to 12wt% fat (weight percent of the total composition), preferably between 1 to 7wt%, preferably between 1 to 5wt%, preferably between 2 to 5wt% (weight percent of the total composition).

In one other embodiment of the present invention, after a heat treatment at 80°C for at least 5 minutes, the marbled aspect of the meat analogue product is not visible anymore. This should again mimic the process and visual effect when cooking a real fat-marbled meat product.

In an embodiment of the present invention, the meat analogue product further comprises oil. The oil is liquid at a temperature below 20°C.

In one embodiment of the present invention, the oil is a vegetable oil selected from rapeseed oil, sunflower oil, cotton seed oil, peanut oil, soya oil, olive oil, coconut oil, algal oil, safflower oil, corn oil, rice bran oil, sesame oil, hazelnut oil, avocado oil, almond oil, walnut oil or a combination thereof, preferably rapeseed oil.

In one embodiment of the present invention, the meat analogue product comprises between 1 to 12wt% oil (weight percent of the total composition), preferably between 2 to 7wt%.

In one important embodiment of the present invention, the meat analogue product is raw and requires cooking before consumption. The meat analogue product of the present invention is intended to mimic raw meat products, which are commercialized as such and are subsequently cooked by the consumer or a professional food out-let. Hence, the meat analogue product of the present invention is raw, meaning that it has not previously been cooked. It is commercialized raw and required to be cooked thereafter by a consumer or a direct food provider.

In one embodiment of the present invention, the meat analogue product is a patty, minced meat, a ball or a sausage, more preferably a minced meat.

Those person skilled in the art will understand that they can freely combine all features of the present invention disclosed herein, described for the different embodiments of the present invention. Further advantages and features of the present invention are apparent from the examples.

| **Ingredients** | **Ex. 3** | **Ex. 4** | **Ex. 5** | **Ex. 5** | **Comp. Ex. 7** | **Comp. Ex. 8** |
|---|---|---|---|---|---|---|
| Textured soy protein [%] | 25.9 | 23.9 | 25.1 | 27.6 | 22.6 | 29 |
| Methyl-cellulose[%] | 2 | 2 | 2 | 2 | 2 | 2 |
| Colorant [%] | 0.5 | 0.5 | 0.5 | 0.5 | 0.5 | 0.5 |
| Flavor [%] | 1.5 | 1.5 | 1.5 | 1.5 | 1.5 | 1.5 |
| Water [%] | 62.1 | 64.1 | 62.9 | 60.4 | 65.4 | 59.0 |
| Coconut oil [%] | 3 | 3 | 3 | 3 | 3 | 3 |
| Rapeseed oil [%] | 5 | 5 | 5 | 5 | 5 | 5 |
| Water/protein ratio | 2.4 | 2.68 | 2.51 | 2.19 | 2.89 | 2.03 |
| % of protein hydration | 73.6 | 82.2 | 77.0 | 67.2 | 88.7 | 62.3 |
| Texture appearance | ++ | + | ++ | + | - Too wet and slimy | - Strands breaks |
| Mouthfeel | ++ | + | ++ | + | - Too soft | - Too dry |

| **Ingredients** | **Ex. 9** |
|---|---|
| Textured pea protein [%] | 25.4 |
| Methyl-cellulose [%] | 2 |
| Colorant [%] | 0.5 |
| Flavor [%] | 1.5 |
| Water [%] | 62.6 |
| Coconut oil [%] | 3 |
| Rapeseed oil [%] | 5 |
| Water/protein ratio | 2.46 |
| % of protein hydration | 75.5 |
| Texture appearance | ++ |
| Mouthfeel | ++ |

7 internal experienced panelists were used to rate the texture and mouthfeel of examples 3 to 9 between "++", "+", "neutral (0)", "-" and "-". The rating "++" shows the best result and "-" would be the worse result. Only when the textured protein is between 65 to 85% hydrated the texture and mouthfeel of the minced meat product has a good performance rating, showing that the best results are obtained, when the textured protein is between 70 to 80% hydrated.

## Claims

1. A process for the preparation of a meat analogue product comprising a textured plant protein, a binder, a flavor, vegetable fat and a colorant, the process comprising the steps of:
a) mixing the textured plant protein with water;
b) adding the binder, the flavor and the colorants, and further mixing to a mass;
c) cooling the mass and adding ground fat having an average particle size of 1-3 mm, and further mixing;
wherein the textured plant protein is hydrated between 65 to 85%, preferably between 70-80%, in the meat analogue product and wherein the meat analogue product has a visual marbled aspect due to the presence of the fat.

2. A process for the preparation of a meat analogue product according to claim 1, wherein the process further comprises pressing the meat analogue product from step b) or c) through a meat grinder having a cross-sectional strand diameter between 2 to 5mm.

3. A process for the preparation of a meat analogue product according to one of the preceding claims, wherein the meat analogue product does not comprise an ingredient from an animal origin.

4. A process for the preparation of a meat analogue product according to one of the preceding claims, wherein the textured plant protein is selected from soy bean protein, pea protein, lentil protein, lupin bean protein, wheat gluten, or a combination thereof.

5. A process for the preparation of a meat analogue product according to one of the preceding claims, wherein the textured plant protein is selected in an amount between 20 to 35wt% (weight percent of the total composition), preferably between 22 to 30wt%.

6. A process for the preparation of a meat analogue product according to one of the preceding claims, wherein the meat analogue product has a ratio between total water and textured plant protein between 2.25 to 2.75, preferably between 2.3 to 2.5.

7. A process for the preparation of a meat analogue product according to one of the preceding claims, wherein the binder comprises a cellulose, a fiber, a gelatinized starch, an un-textured protein isolate, or a combination thereof.

8. A process for the preparation of a meat analogue product according to one of the preceding claims, wherein the binder is methylcellulose in an amount between 1 to 3wt% (weight percent of the total composition), preferably 1.5 to 2.25wt%.

9. A process for the preparation of a meat analogue product according to one of the preceding claims, wherein the vegetable fat is selected from coconut fat, palm fat, shea butter, or a combination thereof.

10. A process for the preparation of a meat analogue product according to one of the preceding claims, wherein after a heat treatment at 80°C for at least 5 minutes, the marbled aspect of the meat analogue product is not visible anymore.

11. A process for the preparation of a meat analogue product according to one of the preceding claims, wherein the meat analogue product is raw and requires cooking before consumption.

12. A process for the preparation of a meat analogue product according to one of the preceding claims, wherein the meat analogue product is a patty, a minced meat, a ball or a sausage, preferably a minced meat.

## Patentansprüche

1. Verfahren für die Herstellung eines Fleischsurrogatprodukts, umfassend ein texturiertes Pflanzenprotein, ein Bindemittel, ein Aroma, Pflanzenfett und einen Farbstoff, das Verfahren umfassend die Schritte:
a) Mischen des texturierten Pflanzenproteins mit Wasser;
b) Zugeben des Bindemittels, des Aromas und der Farbstoffe und weiteres Mischen zu einer Masse;
c) Abkühlen der Masse und Zugeben von gemahlenem Fett, das eine durchschnittliche Partikelgröße von 1-3 mm aufweist, und weiteres Mischen;
wobei das texturierte Pflanzenprotein in dem Fleischsurrogatprodukt zwischen 65 bis 85 %, vorzugsweise zwischen 70-80 %, hydratisiert ist, und wobei das Fleischsurrogatprodukt aufgrund des Vorhandenseins des Fetts ein sichtbar durchzogenes Erscheinungsbild aufweist.

2. Verfahren für die Herstellung eines Fleischsurrogatprodukts nach Anspruch 1, wobei das Verfahren ferner ein Pressen des Fleischsurrogatprodukts aus Schritt b) oder c) durch einen Fleischwolf, der einen Strangquerschnittsdurchmesser zwischen 2 und 5 mm aufweist, umfasst.

3. Verfahren für die Herstellung eines Fleischsurrogatprodukts nach einem der vorstehenden Ansprüche, wobei das Fleischsurrogatprodukt keinen Inhaltsstoff eines tierischen Ursprungs umfasst.

4. Verfahren für die Herstellung eines Fleischsurrogatprodukts nach einem der vorstehenden Ansprüche, wobei das texturierte Pflanzenprotein aus Sojabohnenprotein, Erbsenprotein, Linsenprotein, Lupinenbohnenprotein, Weizengluten oder einer Kombination davon ausgewählt ist.

5. Verfahren für die Herstellung eines Fleischsurrogatprodukts nach einem der vorstehenden Ansprüche, wobei das texturierte Pflanzenprotein in einer Menge von zwischen 20 bis 35 Gew.-% (Gewichtsprozent der Gesamtzusammensetzung), vorzugsweise zwischen 22 bis 30 Gew.-%, ausgewählt ist.

6. Verfahren für die Herstellung eines Fleischsurrogatprodukts nach einem der vorstehenden Ansprüche, wobei das Fleischsurrogatprodukt ein Verhältnis zwischen Gesamtwasser und texturiertem Pflanzenprotein von zwischen 2,25 bis 2,75, vorzugsweise zwischen 2,3 bis 2,5, aufweist.

7. Verfahren für die Herstellung eines Fleischsurrogatprodukts nach einem der vorstehenden Ansprüche, wobei das Bindemittel eine Cellulose, eine Faser, eine gelatinierte Stärke, ein nicht texturiertes Proteinisolat oder eine Kombination davon umfasst.

8. Verfahren für die Herstellung eines Fleischsurrogatprodukts nach einem der vorstehenden Ansprüche, wobei das Bindemittel Methylcellulose in einer Menge von zwischen 1 bis 3 Gew.-% (Gewichtsprozent der Gesamtzusammensetzung), vorzugsweise 1,5 bis 2,25 Gew.-%, ist.

9. Verfahren für die Herstellung eines Fleischsurrogatprodukts nach einem der vorstehenden Ansprüche, wobei das Pflanzenfett aus Kokosfett, Palmfett, Sheabutter oder einer Kombination davon ausgewählt ist.

10. Verfahren für die Herstellung eines Fleischsurrogatprodukts nach einem der vorstehenden Ansprüche, wobei nach einer Wärmebehandlung bei 80 °C für mindestens 5 Minuten das durchzogene Erscheinungsbild des Fleischsurrogatprodukts nicht mehr sichtbar ist.

11. Verfahren für die Herstellung eines Fleischsurrogatprodukts nach einem der vorstehenden Ansprüche, wobei das Fleischsurrogatprodukt roh ist und vor einem Verzehr ein Kochen erfordert.

12. Verfahren für die Herstellung eines Fleischsurrogatprodukts nach einem der vorstehenden Ansprüche, wobei das Fleischsurrogatprodukt ein Bratling, ein Hackfleisch, ein Klößchen oder eine Wurst, vorzugsweise ein Hackfleisch, ist.

## Revendications

1. Procédé pour la préparation d'un produit analogue à la viande comprenant une protéine végétale texturée, un liant, un arôme, une graisse végétale et un colorant, le procédé comprenant les étapes consistant à :
a) mélanger la protéine végétale texturée avec de l'eau ;
b) ajouter le liant, l'arôme et les colorants, et mélanger à nouveau pour obtenir une masse ;
c) refroidir la masse et ajouter de la graisse moulue présentant une taille moyenne de particules allant de 1 à 3 mm, et mélanger à nouveau ;
dans lequel la protéine végétale texturée est hydratée entre 65 à 85 %, de préférence entre 70 et 80 %, dans le produit analogue à la viande et dans lequel le produit analogue à la viande présente un aspect visuel marbré en raison de la présence de la graisse.

2. Procédé pour la préparation d'un produit analogue à la viande selon la revendication 1, dans lequel le procédé comprend en outre la pression du produit analogue à la viande de l'étape b) ou c) à travers un hachoir à viande présentant un diamètre de brin de section transversale compris entre 2 à 5 mm.

3. Procédé pour la préparation d'un produit analogue à la viande selon l'une des revendications précédentes, dans lequel le produit analogue à la viande ne comprend pas un ingrédient d'origine animale.

4. Procédé pour la préparation d'un produit analogue à la viande selon l'une des revendications précédentes, dans lequel la protéine végétale texturée est choisie parmi une protéine de fèves de soja, une protéine de pois, une protéine de lentilles, une protéine de graines de lupin, du gluten de blé, ou une combinaison de ceux-ci.

5. Procédé pour la préparation d'un produit analogue à la viande selon l'une des revendications précédentes, dans lequel la protéine végétale texturée est choisie en une quantité comprise entre 20 à 35 % en poids (pourcentage en poids de la composition totale), de préférence entre 22 à 30 % en poids.

6. Procédé pour la préparation d'un produit analogue à la viande selon l'une des revendications précédentes, dans lequel le produit analogue à la viande présente un rapport entre l'eau totale et la protéine végétale texturée compris entre 2,25 à 2,75, de préférence entre 2,3 à 2,5.

7. Procédé pour la préparation d'un produit analogue à la viande selon l'une des revendications précédentes, dans lequel le liant comprend une cellulose, une fibre, un amidon gélatinisé, un isolat de protéines non texturé, ou une combinaison de ceux-ci.

8. Procédé pour la préparation d'un produit analogue à la viande selon l'une des revendications précédentes, dans lequel le liant est de la méthylcellulose en une quantité comprise entre 1 à 3 % en poids (pourcentage en poids de la composition totale), de préférence 1,5 à 2,25 % en poids.

9. Procédé pour la préparation d'un produit analogue à la viande selon l'une des revendications précédentes, dans lequel la graisse végétale est choisie parmi une graisse de noix de coco, une graisse de palme, du beurre de karité, ou une combinaison de ceux-ci.

10. Procédé pour la préparation d'un produit analogue à la viande selon l'une des revendications précédentes, dans lequel, après un traitement thermique à 80 °C pendant au moins 5 minutes, l'aspect marbré du produit analogue à la viande n'est plus visible.

11. Procédé pour la préparation d'un produit analogue à la viande selon l'une des revendications précédentes, dans lequel le produit analogue à la viande est cru et requiert une cuisson avant consommation.

12. Procédé pour la préparation d'un produit analogue à la viande selon l'une des revendications précédentes, dans lequel le produit analogue à la viande est une galette, une viande hachée, une boulette ou une saucisse, de préférence une viande hachée.
